# EUROPÄISCHE PATENTSCHRIFT

(11) **EP 1 625 101 B1**
(45) Veröffentlichungstag und Bekanntmachung des Hinweises auf die Patenterteilung: **15.04.2009**
(21) Anmeldenummer: 03753315.5
(22) Anmeldetag: 19.09.2003
(51) Int. Cl.: C04B 38/04, B22F 3/22

(54) **VERFAHREN ZUR HERSTELLUNG ENDKONTURNAHER, METALLISCHER UND/ODER KERAMISCHER BAUTEILE**
METHOD FOR THE PRODUCTION OF NEAR NET-SHAPED METALLIC AND/OR CERAMIC PARTS
PROCEDE DE REALISATION DE COMPOSANTS METALLIQUES ET/OU CERAMIQUES PRES DE LA COTE SOUHAITEE

(30) Priorität: 18.10.2002 DE 10248888
(43) Veröffentlichungstag der Anmeldung: 15.02.2006
(73) Patentinhaber: Forschungszentrum Jülich GmbH, 52425 Jülich (DE)
(72) Erfinder: NELLES, Heinz, 9000 Cagayan de Oro City (PH); BRAM, Martin, 52428 Jülich (DE); BUCHKREMER, Hans, Peter, 52525 Heinsberg (DE); STÖVER, Detlev, 52382 Nierderzier (DE)
(86) Internationale Anmeldenummer: PCT/DE2003/003113
(87) Internationale Veröffentlichungsnummer: WO 2004/039748

(56) Entgegenhaltungen:
- EP-A- 0 362 866
- JP-A- 59 083 972
- US-A- 5 613 183
- PATENT ABSTRACTS OF JAPAN vol. 017, no. 011 (C-1015), 8. Januar 1993 (1993-01-08) & JP 04 240167 A (NIPPON SHARYO SEIZO KAISHA LTD), 27. August 1992 (1992-08-27)

## Beschreibung

Die Erfindung betrifft ein Verfahren zur Herstellung von endkonturnahen Bauteilen, insbesondere Bauteilen aus metallischen und/oder keramischen Pulvern, wobei die Technik des Pulverformspritzens (PIM) angewandt wird.

### Stand der Technik

### A) Verfahren zur endkonturnahen Herstellung von metallischen Bauteilen

Das Metallformspritzen (MIM = metal powder injection moulding), auch Metallpulverspritzen genannt, ist als ein Verfahren zur Massenherstellung von metallischen Bauteilen bekannt, insbesondere für die endkonturnahe (NNS = near net shape) Herstellung solcher Bauteile. Das MIM-Verfahren erlaubt es, kleine bis mittelgroße komplex geformte Teile in hohen Stückzahlen kostengünstig und automatisiert herzustellen. Das MIM-Verfahren liefert Bauteile mit einer Dichte von 95 - 98% der theoretischen Dichte, durch nachträgliches heißisostatisches Pressen der Körper (ohne Kapselwerkstoff) kann eine Dichte von 100% erzielt werden.

Das Verfahren umfaßt das Plastifizieren von Metallpulvern mit sphärischer bzw. irregulärer Morphologie (Partikelgrößen des Pulvers 5 - 300 µm) mittels eines Bindersystems zu einem sog. Feedstock. Ziel der Aufbereitung ist die Ummantelung aller Pulverpartikel mit dem organischen Binder. Die Homogenisierung des Feedstocks erfolgt in einem Kneter. Danach wird der Feedstock in die Spritzgußmaschine eingefüllt. In einer beheizten Zone werden Teile des Bindersystems (z. B. geeignete Wachse) aufgeschmolzen. Eine Schnecke fördert die thermoplastische Masse in das teilbare Formenwerkzeug. Nach Beendigung der Formfüllung erstarrt die Flüssigphase wieder und ermöglicht die Entnahme des Bauteils aus der Form. Die Entfernung des Bindersystems erfolgt durch einen der Sinterung vorgeschalteten Entbinderungsschritt. Je nach Bindersystem werden dabei die Zusatzstoffe auf unterschiedliche Art wieder aus dem Bauteil entfernt. Eine solche Vorentbinderung und ihre Vorteile sind beispielsweise aus US 5,613,183 bekannt.

Es wird unterschieden zwischen thermischen Entbinderungsverfahren (Herausschmelzen oder Zersetzen über die Gasphase), Lösungsmittelextraktion sowie katalytische Entbinderung. Im Anschluß erfolgt der Sinterprozeß, bei dem über Diffusionsprozesse eine Verdichtung des Bauteils auf bis zu 98 % der theoretischen Dichte erreicht wird. Aufgrund des hohen Bindergehalts treten beim Sintern große Schwindungen (15 - 20 %) auf. Die Kontrolle des Schwindungsverhaltens ist eine der wesentlichen Anforderungen bei der Herstellung von near-net-shape Bauteilen.

Typische geeignete Materialien für die metallische Komponente beim Metallpulverspritzen sind rostfreier Stahl, Carbonstahl, Werkzeugstahl oder Legierungsstahl, aber auch Ferrit, Wolframcarbid und Mischungen aus Kupfer /Bronze, Kobalt/Chrom oder auch Wolfram/Kupfer.

### B) Verfahren zur Herstellung von endkonturnahen keramischen Bauteilen

Das vorgenannte Verfahren des Metallformspritzens (MIM = metal powder injection moulding), ist inzwischen auch für die Herstellung von keramischen Bauteilen abgewandelt worden. Das sogenannte Pulverspritzen (PIM = powder injection moulding), läßt auch die Herstellung von keramischen Bauteilen zu (CIM = ceramic injection moulding). Bei der Herstellung einer entsprechenden Pulverspritzgußmasse wird mit organischem Binder Keramikpulver homogenisiert. Der Spritzgussprozess und das Sintern werden im Wesentlichen analog zum Metallformspritzen durchgeführt, wobei aber die spezifischen Eigenschaften von Keramikpulvern (z. B. kleinere Korngrößen des Ausgangspulvers) berücksichtigt werden müssen.

### C) Herstellung poröser metallischer Bauteile

Das Pressen von Metallpulvern zur Herstellung von porösen Metallkörpern ist ebenfalls aus der Literatur bekannt. Zur Erzeugung der gewünschten Porosität können den Metallpulvern dabei sogenannte Platzhaltermaterialien zugegeben werden, die es ermöglichen, die gewünschte Porosität einzustellen. Nach Pressen von Grünkörpern aus dem Pulvergemisch ist das Platzhaltermaterial dann aus den Grünkörpern so zu entfernen, dass der Grünkörper allein noch vom verbleibenden Metallpulvergerüst gehalten wird, das zwischen seiner Gerüststruktur Hohlräume aufweist. Der Grünkörper weist somit die spätere poröse Struktur des Formkörpers bereits auf. Beim Austreiben des Platzhaltermaterials ist dafür Sorge zu tragen, dass das Metallpulvergerüst erhalten bleibt. Mittels nachfolgendem Sintern der Grünkörper entsteht ein hochporöser Formkörper, wobei die Berührungsflächen der Pulverteilchen beim Sintern diffusionsverbunden werden.

Als Platzhaltermaterialien zur Ausbildung poröser metallischer Formkörper sind zum einen relativ hochschmelzende organische Verbindungen bekannt, welche durch Verdampfen oder Pyrolyse (Cracken) und Lösen der entstandenen Crackprodukte mittels geeigneter Lösungsmittel aus den Grünkörpern entfernt werden. Problematisch sind hierbei der erhebliche Zeitaufwand bei der Entfernung des Platzhaltermaterials sowie Crackprodukte, die mit nahezu allen pulvermetallurgisch zu verarbeitenden Metallen, wie Ti, Al, Fe, Cr, Ni, etc., reagieren und hohe Konzentrationen an Verunreinigungen hinterlassen. Nachteilig wirkt sich auch bei Verwendung von Thermoplasten, die durch Erwärmen des Grünkörpers entfernt werden, die Expansion am Glasübergangspunkt aus, die notwendige Stabilität des Grünkörpers wird hierdurch beeinträchtigt.

Zum anderen werden als Platzhaltermaterialien auch hochschmelzende anorganische Verbindungen wie Alkalisalze und niedrigschmelzende Metalle wie Mg, Sn, Pb etc. verwendet. Solche Platzhaltermaterialien werden im Vakuum oder unter Schutzgas bei Temperaturen zwischen ca. 600 bis 1000 °C unter hohem Energie- und Zeitaufwand aus den Grünkörpern entfernt. Nicht zu verhindern sind bei diesen Platzhaltermaterialien im Grünkörper verbleibende Verunreinigungen, die insbesondere bei Formkörpern aus reaktiven Metallpulvern, wie Ti, Al, Fe, Cr, Ni, schädlich sind.

Bei Alkalisalzen besteht prinzipiell als weitere Möglichkeit zur Entfernung das Herauslösen durch geeignete Lösungsmittel (z. B. Wasser). Dieses Verfahren ist für gepresste Metallpulver-Alkalisalz-Mischungen jedoch ungeeignet, da die Formstabilität der Presslinge bei diesem Prozess vollständig verlorengeht.

Aus JP 59-083972 ist ein Verfahren zur Herstellung von porösen keramischen Bauteilen offenbart. Dabei wird keramisches Pulver, ein Binder, ein wasserlösliches Lösungsmittel und ein Granulat als Platzhalter gemischt und in eine Form gegeben. Das Lösungsmittel und der Platzhalter werden durch eine Extraktion mit Wasser entfernt. Die so erhaltene Masse wird anschließend gesintert und kann als Filtermaterial für Abgase in Autos eingesetzt werden.

Aus DE 196 38 927 C2 ist ein Verfahren zur Herstellung von hochporösen, metallischen Formkörpern bekannt, bei dem zunächst Metallpulver und ein Platzhalter gemischt und anschließend zu einem Grünzeug gepreßt werden. Dabei können sowohl das uniaxiale als auch das isostatische Pressen zur Anwendung kommen. Der Platzhalter wird thermisch ausgetrieben und der Grünkörper anschließend gesintert. Wird die Pulver-Platzhalter-Mischung durch einen Binder stabilisiert, ist es prinzipiell möglich durch das mehraxiale Pressen auch relativ kompliziertere Bauteilgeometrien direkt zu realisieren. Die Anfertigung eines geeigneten Preßwerkzeugs ist jedoch aufwendig und teuer. Speziell für kleine Serien ist es deshalb vorteilhaft, zuerst Halbzeuge mit einer universellen Geometrie (z. B. Zylinder oder Platten) herzustellen und diese durch nachfolgende mechanische Bearbeitung auf die gewünschte Endkontur zu bringen.

Vermehrt besteht die Notwendigkeit hochporöse Bauteile auch in großen Stückzahlen zur Verfügung zu stellen, welche ihre Anwendung in der Medizintechnik, der Luft- und Raumfahrt oder auch der Filtertechnik finden. Poröse Bauteile werden heute z. B. durch Aufschäumen von Aluminium oder pulvertechnologisch durch den Einsatz geeigneter Platzhalterwerkstoffe hergestellt. Diese Verfahren erlauben nur bedingt eine endkonturnahe Fertigung insbesondere komplizierter Geometrien in großen Stückzahlen.

### Aufgabe und Lösung

Der Erfindung liegt die Aufgabe zugrunde, ein Verfahren zur Herstellung von endkonturnahen metallischen und/oder keramischen Bauteilen zur Verfügung zu stellen, bei denen hochporöse Bauteile hergestellt werden können, die eine offene Porosität von mehr als 10 Vol.-%, insbesondere von mehr als 50 Vol.-% aufweisen. Die Aufgabe wird gelöst durch ein Verfahren mit der Gesamtheit der Merkmale des Hauptanspruchs. Vorteilhafte Ausgestaltungen des Verfahrens finden sich in den davon abhängigen Unteransprüchen.

### Gegenstand der Erfindung

Die vorliegende Erfindung befaßt sich mit der Herstellung komplexer, hochporöser und endkonturnaher Bauteile, bei der das sog. Pulverformspritzen (Powder Injection Moulding PIM) zum Einsatz kommt. Die bei diesem Verfahren bislang nicht möglichen Porositäten werden erfindungsgemäß durch Verwendung geeigneter Platzhalter eingestellt. Beim bekannten Powder Injection Moulding (PIM), welches das Metal Injection Moulding (MIM) und das Ceramic Injection Moulding (CIM) umfasst, können metallische wie auch keramische Pulver verarbeitet werden. Vor allem bei metallischen Pulvern besteht die Notwendigkeit geringer Restverunreinigungen nach der Durchführung des Prozesses.

Im folgenden werden die einzelnen Verfahrensschritte des erfindungsgemäßen Herstellungsverfahrens beschrieben und ein Anwendungsbeispiel gegeben.

### Ausgangspulver

Das vorgenannte Verfahren eignet sich zur Verarbeitung metallischer Pulver als auch keramischer Pulver. Die Partikelgrößen der Ausgangspulver können im Bereich bis max. 300 µm liegen. Zur Abformung feiner Strukturen und zur Einstellung eines hohen Versinterungsgrades zwischen den Pulverteilchen sind aber feinere Pulverfraktionen zu bevorzugen (< 50 µm). Geeignete metallische Materialien sind beispielsweise rostfreier Stahl, Carbonstahl, Werkzeugstahl oder Legierungsstahl, sowie Ferrit, Wolframcarbid, Mischungen aus Kupfer /Bronze, Kobalt/Chrom oder auch Wolfram/Kupfer.
Ergänzend dazu wurden zur Untersuchung des Potentials des Verfahrens als Ausgangswerkstoffe insbesondere Titan, TiAl₆V₄, Nickel-Titan (NiTi) sowie rostfreier Stahl (z. B. 316L) eingesetzt. Diese Stoffe besitzen eine hohe Affinität zu den Elementen Sauerstoff, Kohlenstoff, Stickstoff sowie zu den Halogenen und geben so einen Hinweis auf die zu erwartenden Verunreinigungen im gesinterten Bauteil.

Die einzusetzenden Platzhalter sollten insbesondere folgende Kriterien erfüllen:
■ Korngrößen von 20 bis 2000 µm
■ Keine Toxizität
■ Wassergefährdungsklasse 0 bis max. 1
■ Gut wasserlöslich (Voraussetzung für Platzhalterentfernung)
■ Keine Zersetzung bis max. 800°C
■ Preiswert
Es wurde im Rahmen der Erfindung herausgefunden, daß insbesondere NaCl, KCl, K₂CO₃ und Na₂CO₃ diese Bedingungen erfüllen und zum gewünschten Erfolg führen. Diese Platzhalter erfüllen ihre Funktion besonders gut in der Kombination mit dem MIN-Feedstock, da die Komponenten des Feedstocks allein schon die Stabilität der Bauteile sicherstellen. Es ist jedoch dafür Sorge zu tragen, dass die Bestandteile des Feedstocks nicht vom verwendeten Lösungsmittel angelöst werden. Um im späteren Bauteil reproduzierbare Eigenschaften sicherzustellen, ist eine Eingangscharakterisierung der eingesetzten Ausgangspulver (Korngrößenverteilung, Oberflächenbeschaffenheit, chemische Analyse der Verunreinigungen, Schütt- und Klopfdichte) Grundvoraussetzung.

### Herstellung der Spritzgußmasse

Das Metallpulver wird mit dem Platzhalter unter Zugabe eines Binders in einem auf 110 °C vorgewärmten Kneter plastifiziert und homogenisiert. Der Binder besteht aus zwei Komponenten, einer plastifizierenden (Amidwachs) und einer dem Grünling Stabilität gebenden Komponente (Polyolefin).

### Formgebender Spritzguß

Die homogenisierte und zum Spritzguß zerkleinerte Masse, bestehend aus Metallpulver, Platzhalter und Binder wird auf einer Spritzgußmaschine bei 110 °C bis 120 °C plastifiziert und in eine auf ca. 30 - 50 °C, insbesondere auf ca. 40 °C vortemperierte Form injiziert. Dabei sind Drücke und Temperaturen so aufeinander abzustimmen, dass es zu keiner Separation oder inhomogenen Verteilung des Platzhalters kommt.

### Kapillaraktives Vorentbindern der Bauteile (Grünlinge)

Die Vorentbinderung führt zu einer offenen Porosität im Grünling, die im nächsten Verfahrensschritt den Zutritt eines Lösungsmittels zu den Platzhalterpartikeln ermöglicht. Je nach Partikelgröße der Ausgangspulver erfolgt die Vorentbinderung ein- oder zweistufig. Liegt die Partikelgröße im Bereich von 20 bis 500 µm ist eine einstufige Entbinderung ausreichend, um die erforderliche Porosität zu erreichen. Dazu werden die Grünlinge auf einen kapillaraktiven Stoff (Al₂O₃-Pulverschüttung) gelegt und bei 700 mbar absolut in einen auf 130 °C vorgeheizten Vakuumtrockenschrank gelegt. Danach wird der Trockenschrank innerhalb von 2 h auf 185 °C erhitzt. Hierbei wird ca. 50 Gew.-% der fließgebenden Komponente (Amidwachs) entfernt. Die kapillaraktive Entbinderung wird auch als "Wicken" bezeichnet. Liegt die Partikelgröße der Ausgangspulver unterhalb von 20 µm sollte im Anschluß an die kapillaraktive Vorentbinderung zusätzlich eine thermische Vorentbinderung vorgenommen werden. Hierzu werden die nach dem kapillaraktivem Vorentbindern erhaltenen Bauteile in einem Ofen bei 20 mbar und einem Argonstrom von 10 l/min von 20 °C auf 270 °C erhitzt. Die Aufheizrate beträgt ca. 5 K/min. Direkt im Anschluß wird abgekühlt.

### Entfernung des Platzhalters

Nach dem Vorentbindern besitzen die Grünlinge eine ausreichende offene Porosität, um den Platzhalter im nächsten Schritt zumindest partiell mit Hilfe einer Flüssigkeit, bevorzugt in einem Wasserbad, zu extrahieren. Dazu werden die vorentbinderten, stabilen Grünlinge beispielsweise in ein auf 40 °C bis 80 °C vortemperiertes Wasserbad gelegt, welches mit einem kontinuierlichen Wasserdurchsatz und einer Rührvorrichtung ausgestattet ist. Mit Hilfe von Leitfähigkeitsmessungen wird während des Herauslösens des Platzhalters die Ionenkonzentration des Wasserbads geprüft. Können keine Ionen mehr nachgewiesen werden, ist der Platzhalter nahezu vollständig entfernt. Dieser Vorgang dauert beispielsweise für ein Bauteil aus Titan mit einer Porosität von 70 Vol.-% und einem Gesamtvolumen von 10 cm³ ca. 3,5 Stunden.
Als ebenfalls geeignete Flüssigkeiten können alle Flüssigkeiten eingesetzt werden, in denen sich der Platzhalter löst, und die selbst regelmäßig keine chemischen Reaktionen mit dem Material des Grünlings eingehen.

### Restentbinderung der platzhalterfreien Bauteile

Die Entfernung der noch verbliebenen Reste des Binders (im wesentlichen die stabilitätsgebende Komponente Polyolefin) wird wiederum thermisch vorgenommen. Dazu werden die Bauteile beispielsweise in einem Ofen bei einem Druck von 20 mbar und einem Argonstrom von 10 l/min mit einer Heizrate von 4 K/min von Raumtemperatur auf 480 °C erhitzt, direkt danach wieder abgekühlt und dem Sintern.zugeführt.

### Sintern der platzhalterfreien und entbinderten Proben

Je nach Werkstoff werden die Bauteile auf geeignete Sinterunterlagen gelegt und bei Temperaturen von 800 bis 2400 °C in geeigneten Atmosphären (Vakuum, Argon, Argon/Wasserstoff, andere) gesintert. Dabei sind auch die Aufheizraten und Haltezeiten werkstoffspezifisch.

Das erfindungsgemäß abgewandelte Verfahren des Powder Injection Moulding eignet sich vorteilhaft zur Herstellung hochporöser, endkonturnaher Bauteile aus metallischen und keramischen Ausgangspulvern. Dadurch lassen sich komplexe Geometrien prinzipiell in großen Stückzahlen realisieren. Die verwendeten Platzhalter (NaCl, KCl, K₂CO₃, Na₂CO₃) sind nicht toxisch. Sie können schnell und quasi restlos unter sehr geringem Aufwand (Herauslösen im Wasserbad) wieder aus den Bauteilen entfernt werden. Da die Stabilität der Bauteile durch den Binder gewährleistet ist, behalten die Bauteile ihre endkonturnahe Form bei der Entfernung des Platzhalters bei. Die Platzhalter sind preiswert und können, falls erforderlich, aus ihren Lösungen wiedergewonnen werden.
Mit den Platzhaltern können Porengrößen im Bereich von 20 µm bis 2 mm sowie Porositäten von 10 bis 85 Vol.-%, insbesondere von mehr als 30 Vol.-% oder mehr als 50 Vol.- % gezielt eingestellt werden. Die Porenverteilung ist sehr homogen, da der Feedstock aufgrund seiner Viskosität eine gute Mischungsgüte aufweist. Die Dauer des gesamten Verfahrensablaufs wird wesentlich durch die Entbinderung und die Entfernung des Platzhalters bestimmt. Ab dem kapillaraktiven Vorentbindern und selbst unter dem zusätzlichen Aufwand des thermischen Vorentbinderns (für Metall- und Keramikpulver < 20 µm) beträgt die Gesamtzeit nicht mehr als 14 bis 20 Stunden. Darin enthalten sind das Platzhalterentfernen, das Restentbindern und das Sintern incl. der Aufheiz- und Abkühlphasen und Haltezeiten. Daraus ergibt sich ein kostengünstiges und mit moderatem Aufwand durchzuführendes Verfahren, sofern mittlere bis große Stückzahlen geplant sind.

### Spezieller Beschreibungsteil

Nachfolgend wird der Gegenstand der Erfindung anhand eines Ausführungsbeispiels näher erläutert, ohne daß der Gegenstand der Erfindung dadurch beschränkt wird.

Als Beispiel wird der Verfahrensablauf zur Herstellung eines konkreten hochporösen Bauteils (Zylinder mit Durchmesser 25 mm, Höhe 30 mm im Grünzustand) aus dem rostfreien Stahl 316L (Werkstoffnummer 1.4404) mit einer Porosität von mind. 70 Vol.-% und Porengrößen im Bereich von 200 bis 400 µm beschrieben. Aufgrund des Volumens des vorhandenen Kneters wird ein Ansatz von 300 cm³ hergestellt. Die Ausgangsstoffe sind:
■ Metallpulver rostfreier Stahl 316L (1.4404), Dichte 7,9 g/cm³. Partikelgröße < 15 µm
■ Binder: 60 Gew.-% Amidwachs, Handelsbezeichnung Wachs C,
   Dichte 1,0 g/cm³
   40 Gew.-% Polyolefin, Handelsbezeichnung PE 520,
   Dichte 0,93 g/cm³
■ Platzhalter: NaCl, Dichte 2,14 g/cm³,
   Partikelfraktion 200 - 400 µm durch Absieben

Für einen Ansatz mit 70 Vol.-% Platzhalter und einem Gesamtvolumen von 300 cm³ ergibt sich folgende Zusammensetzung:
■ 470,4 g Metallpulver, rostfreier Stahl 316L
■ 297,3 g Platzhalter NaCl
■ 59,1 g Wachs C
■ 39,4 g PE 520
Zur Herstellung der Spritzgußmasse wird zuerst der Binder bei 185 °C aufgeschmolzen und dann das Metallpulver zugegeben. Nach der Plastifizierung von Metallpulver und Binder wird der Platzhalter zugegeben und 2 h homogenisiert. Die Masse wird entnommen, zerkleinert und dem Spritzgußprozeß zugeführt. Für die Verarbeitung und Formgebung der Spritzgußmasse gelten folgende Parameter und Maschineneinstellungen. Da die Einstellungen von der Geometrie des Bauteils, sowie vom Binder- und Platzhaltergehalt abhängen, können keine Absolutwerte sondern nur Bereiche angegeben werden.
■ Formtemperatur: 44 °C bis 49 °C Zylinderheizzonen:

■ Zone 1 (an der Düse): 144 bis 148 °C
■ Zone 2: 135 °C
■ Zone 3 (Einzug der Masse): 50 °C
■ Einspritzdruck: 150 bis max. 500 bar
■ Einspritzzeit: 3 bis 6 s
■ Einspritzstrom: 10 bis 50 cm³/s

Im Anschluß werden die Bauteile (Grünlinge) auf einen kapillaraktiven Stoff (Al₂O₃ Agglomerate der Größen 600 bis 800 µm) gelegt. Die Proben kommen nun in einen auf 130 °C vorgeheizten Vakuumtrockenschrank. Die Proben werden auf 700 mbar abs. evakuiert und eine halbe Stunde bei 130 °C vorgewärmt. Danach wird mit ca. 1 K/min bis 185 °C hochgefahren, 1 Stunde gehalten und wieder abgekühlt. Die Proben können bereits bei einer Temperatur von 120 °C dem Vakuumtrockenschrank entnommen werden. Da die Partikelgröße des 316L-Pulvers < 15 µm ist, müssen die Proben zusätzlich thermisch entbindert werden. Dazu werden die Proben im Ofen bei 20 mbar und einem Argonstrom von 5 l/min mit einer Heizrate von 4 K/min auf 260 °C erwärmt und wieder abgekühlt. Hierauf folgt das Wässern in einem auf 50 °C temperierten Wasserbad unter ständigem Rühren (Magnetrührer), um den Platzhalter NaCl zu entfernen. Gravimetrisch wurde die völlige Entfernung des Platzhalters aus der Probe nach 3 h ermittelt. Die Proben, welche jetzt nur noch aus Metallpulver, Wachs PE 520 und sehr geringen Mengen Wachs C bestehen, werden im Ofen bei 20 mbar und einem Argonstrom von 5 l/min mit einer Heizrate von 5K/min bis 480 °C erhitzt und sofort wieder abgekühlt. Gravimetrisch konnte die vollständige Entfernung aller vorberechneten Mengen an Platzhalter und Binder aus den Proben nachgewiesen werden. Die Proben lagern bereits beim Restenbindern auf einer Al₂O₃-Unterlage, mit welcher sie dann dem Sinterprozeß zugeführt werden. Gesintert wurden die Proben bei 1000 °C, 2 h im Vakuum. Nach dem Sintern wurde eine Porosität von 78 Vol.-% ermittelt. Durch die reduzierenden Bedingungen beim Sintern kann sogar eine Abnahme des Sauerstoff- und Stickstoffgehalts nachgewiesen werden. Der erwartete Anstieg des Kohlenstoffgehalts hält sich in Grenzen.

Die Figur zeigt die Mikrostruktur eines hochporösen metallischen Bauteils aus 316L, welches bei 1000 °C für 2 h gesintert wurde. Auffällig ist die Porenform, die die kubische Kristallstruktur der NaCl-Körner als Platzhalter abbildet.

## Patentansprüche

1. Verfahren zur Herstellung von porösen, endkonturnahen, metallischen und/oder keramischen Bauteilen mit einer offenen Porosität von mindestens 10 % mit den Schritten:
a) aus metallischem und/oder keramischem Pulver, einem 2-Komponentenbinder umfassend eine erste, fliessgebende und eine zweite, stabilitätsgebende Komponente, und wenigstens einem Platzhalter wird eine Spritzgussmasse erzeugt,
b) durch einen Spritzvorgang wird die so gebildete Spritzgussmasse bei Temperaturen zwischen 30 und 50 °C in eine Form des herzustellenden Bauteils eingebracht,
c) das abgekühlte Bauteil (Grünling) wird einem kapillaraktiven Stoff ausgesetzt und vorentbindert, wobei die erste, fliessgebende Komponente des Binders zumindest teilweise entfernt wird und eine offene Porosität in dem Bauteil erzeugt wird,
d) anschließend wird der Platzhalter durch eine Flüssigkeit zumindest teilweise aus dem Bauteil entfernt,
e) danach wird das Bauteil einem thermischen Entbinderungsprozess unterzogen, bei dem die zweite, stabilitätsgebende Komponente des Binders entfernt wird,
f) das Bauteil wird anschließend gesintert.

2. Verfahren nach Anspruch 1, bei dem als Platzhalter NaCl, KCl, K₂CO₃ oder Na₂CO₃ eingesetzt wird.

3. Verfahren nach Anspruch 1 bis 2, bei dem als metallisches Pulver rostfreier Stahl, Ti, NiTi oder eine Titanlegierung eingesetzt wird.

4. Verfahren nach Anspruch 1 bis 3, bei dem zwischen den Schritten c) und d) eine thermische Vorentbinderung durchgeführt wird.

5. Verfahren nach Anspruch 4, bei dem die thermische Vorentbinderung bei Temperaturen bis zu 270 °C und unter Schutzgasatmosphäre durchgeführt wird.

6. Verfahren nach Anspruch 1 bis 5, bei dem Ausgangspulver mit einer Partikelgröße von weniger als 20 µm eingesetzt wird.

7. Verfahren nach Anspruch 1 bis 6, bei dem die thermische Entbinderung bei Temperaturen bis zu 500 °C und unter Schutzgasatmosphäre durchgeführt wird.

8. Verfahren nach Anspruch 1 bis 7, bei dem eine bis 50 °C temperierte Flüssigkeit eingesetzt wird.

9. Verfahren nach Anspruch 1 bis 8, bei dem als Flüssigkeit Wasser eingesetzt wird, um den Platzhalter zu entfernen.

10. Verfahren nach Anspruch 9, bei dem ein gerührtes Wasserbad eingesetzt wird, um den Platzhalter zu entfernen.

11. Verfahren nach Anspruch 1 bis 10, bei dem bei der thermischen Entbinderung Argon als Schutzgas eingesetzt wird.

12. Verfahren nach Anspruch 1 bis 11, bei dem eine offene Porosität des Bauteils von wenigstens 30 Vol.-%, insbesondere von 50 Vol.-% erzeugt wird.

## Claims

1. A method of producing porous, near-net shaped metallic and/or ceramic parts having at least 10 % open porosity, comprising the following steps:
a) an injection moulding compound is produced from metallic and/or ceramic powder, a 2-component binder containing a first component which provides fluidity and a second component which provides stability, and at least one place holder,
b) at temperatures between 30 and 50 °C and by an injection operation the thus formed injection moulding compound is inserted into a mould of the part to be produced,
c) the cooled part (green product) is subjected to a capillary active material and there is a preliminary removal of the binder, while the first, fluidity providing component of the binder is at least partly removed and an open porosity is generated in the part.
d) subsequently, the place holder is at least partly removed from the part by a liquid,
e) then the part is subjected to a thermal binder removal process in which the second, stability providing component of the binder is removed,
f) the part is subsequently sintered.

2. A method according to claim 1, wherein NaCl, KCl, K₂CO₃ or Na₂CO₃ is used as a place holder.

3. A method according to claims 1 to 2, wherein stainless steel, Ti, NiTi or a titanium alloy is used as a metallic powder.

4. A method according to claims 1 to 3, wherein a thermal preliminary removal of the binder is performed between the steps c) and d).

5. A method according to claim 4, wherein the preliminary thermal removal of the binder is performed at temperatures up to 270 °C and under a protective gas atmosphere.

6. A method according to claims 1 to 5, wherein basic powder having a particle size of less than 20 µm is used.

7. A method according to claims 1 to 6, wherein the thermal binder removal is conducted at temperatures up to 500 °C and under protective gas atmosphere.

8. A method according to claims 1 to 7, wherein a fluid tempered up to 50 °C is used.

9. A method according to claims 1 to 8, wherein the fluid used for removing the place holder is water.

10. A method according to claim 9, wherein an stirred water bath is used to remove the place holder.

11. A method according to claims 1 to 10, wherein argon is used as a protective gas during the thermal binding removing step.

12. A method according to claims 1 to 11, wherein an open porosity of the part of at least 30% by volume, more particularly of 50% by volume is generated.

## Revendications

1. Procédé de fabrication d'éléments de construction poreux, près des cotes, métalliques et/ou céramiques avec une porosité surfacique d'au moins 10 %, comprenant les étapes consistant à :
a) produire une matière de moulage par injection à partir d'une poudre métallique et/ou céramique, d'un liant à deux composants comprenant un premier composant favorisant l'écoulement et un deuxième composant conférant de la stabilité, et d'au moins un élément de remplacement,
b) introduire par une opération d'injection la matière de moulage par injection ainsi formée à des températures entre 30 et 50 °C dans un moule de l'élément de construction à fabriquer,
c) exposer l'élément de construction refroidi (ébauche) à un agent tensioactif et le soumettre à une décomposition préliminaire, dans laquelle le premier composant favorisant l'écoulement du liant est retiré au moins en partie et une porosité surfacique est créée dans l'élément de construction,
d) par la suite, retirer l'élément de remplacement au moins en partie de l'élément de construction à l'aide d'un liquide,
e) ensuite, soumettre l'élément de construction à un processus de décomposition thermique dans lequel le deuxième composant conférant de la stabilité du liant est retiré,
f) par la suite, fritter l'élément de construction.

2. Procédé selon la revendication 1, dans lequel du NaCl, KCl, K₂CO₃ ou NaCO₃ est mis en oeuvre en tant qu'élément de remplacement.

3. Procédé selon la revendication 1 ou 2, dans lequel de l'acier inoxydable, du Ti, du NiTi ou un alliage de titane est mis en oeuvre en tant que poudre métallique.

4. Procédé selon les revendications 1 à 3, dans lequel entre les étapes c) et d), une décomposition thermique préliminaire est exécutée.

5. Procédé selon la revendication 4, dans lequel la décomposition thermique préliminaire est exécutée à des températures pouvant atteindre 270 °C et sous une atmosphère de gaz inerte.

6. Procédé selon les revendications 1 à 5, dans lequel une poudre de départ d'une grosseur de particules de moins de 20 µm est mise en oeuvre.

7. Procédé selon les revendications 1 à 6, dans lequel la décomposition thermique est exécutée à des températures jusqu'à 500 °C et sous une atmosphère de gaz inerte.

8. Procédé selon les revendications 1 à 7, dans lequel un liquide équilibré à 50 °C est mis en oeuvre.

9. Procédé selon les revendications 1 à 8, dans lequel de l'eau est utilisée comme liquide pour retirer l'élément de remplacement.

10. Procédé selon la revendication 9, dans lequel un bain-marie agité est mis en oeuvre pour retirer l'élément de remplacement.

11. Procédé selon les revendications 1 à 10, dans lequel de l'argon est mis en oeuvre comme gaz inerte lors de la décomposition thermique.

12. Procédé selon les revendications 1 à 11, dans lequel une porosité surfacique de l'élément de construction d'au moins 30 % en volume, en particulier de 50 % en volume, est créée.
